# EUROPÄISCHE PATENTSCHRIFT

(11) **EP 4 206 510 B1**
(45) Veröffentlichungstag und Bekanntmachung des Hinweises auf die Patenterteilung: **12.02.2025**
(21) Anmeldenummer: 22216548.2
(22) Anmeldetag: 23.12.2022
(51) Int. Cl.: F16L 5/10, F16L 5/14

(54) **FUTTERROHR ZUM DURCHFÜHREN EINER ODER MEHRERER LEITUNGEN DURCH EINEN WANDABSCHNITT**
CASING FOR PASSING ONE OR MORE LINES THROUGH A WALL SECTION
TUBAGE POUR LA MISE EN OEUVRE D'UNE OU DE PLUSIEURS CONDUITES À TRAVERS UNE SECTION DE PAROI

(30) Priorität: 29.12.2021 DE 202021003890 U
(43) Veröffentlichungstag der Anmeldung: 05.07.2023
(73) Patentinhaber: DOYMA GmbH & Co, 28876 Oyten (DE)
(72) Erfinder: Fiedler, Arne, 28199 Bremen (DE); Müller, Philipp, 28832 Achim (DE); Kesmann, Alexander, 27313 Dörverden (DE)
(74) Vertreter: Eisenführ Speiser

(56) Entgegenhaltungen:
- EP-A1- 1 462 706
- AT-B1- 523 833
- DE-U1- 202011 004 235
- US-B2- 10 344 472

## Beschreibung

Die Erfindung bezieht sich auf ein Futterrohr zum Durchführen einer oder mehrerer Leitungen durch einen Wand- oder Bodenabschnitt eines Gebäudes, mit einem Rohrkörper, der dazu eingerichtet ist, in einer aushärtbaren Vergussmasse des Wandabschnittes eingebettet zu werden, und einem an einem Ende des Rohrkörpers angeordneten Anschlussflansch.

Solche Futterrohre sind aus dem Stand der Technik bekannt und werden insbesondere beim Herstellen eines Wandabschnittes einer Gebäudewand eingesetzt, und werden nach Fertigstellung der Gebäudewand als Rohrdurchführung für wenigstens eine durch den Wandabschnitt zu führende Leitung verwendet. Unter durch einen Wandabschnitt des Gebäudes zu führenden Leitungen sind unter anderem Daten- oder Stromleitungen sowie Medienleitungen, wie Wasser- oder Gasrohre, zu verstehen.

Futterrohre der vorbezeichneten Gattung umfassen einen Rohrkörper, der dazu eingerichtet ist, in einer aushärtbaren Vergussmasse des herzustellenden Wandabschnittes eingebettet zu werden, und einen an einem Ende des Rohrkörpers angeordneten Anschlussflansch, der üblicherweise dazu eingerichtet ist, bündig mit dem Wandabschnitt abzuschließen. Häufig wird der insbesondere mit der Außenseite des herzustellenden Wandabschnittes abschließende Anschlussflansch zur Anbindung einer auf der Außenseite des Wandabschnittes aufgebrachten Flächenabdichtung eingesetzt.

Aufgrund der variierenden Wanddicken sind die Futterrohre entsprechend auf das gewünschte Längenmaß unter Verwendung eines Trennwerkzeuges am Installationsort zu kürzen, was sich oft aufwendig gestaltet. Dazu ist die gewünschte Länge auf der Außenseite des Rohrkörpers anzuzeichnen und anschließend wird das Rohr üblicherweise von Hand eingekürzt. Beim Einkürzen des Rohrkörpers kann es unter Umständen zum Verlaufen des Trennwerkzeuges kommen, was zur Folge hat, dass der Rohrkörper über seinen Umfang ein ungleichmäßiges Längenmaß aufweist, was sich nachteilig auf das Abdichten gegenüber den das Futterrohr zwischen sich aufnehmenden Schalungsteilen, welche die Wandstärke des herzustellenden Wandabschnittes definieren, auswirken kann.

US 10,344,472 B2 betrifft einen rohrförmigen Durchgang für gegossene Betondecken, der zwei relativ zueinander bewegbare Rohrabschnitte aufweist, die über miteinander in Eingriff bringbare Rastmittel in verschiedenen Positionen zueinander verstellbar sind. Das freie Ende des ersten Rohrabschnitts wird über ein Gewinde mit einem einen Flansch aufweisenden Sockel verschraubt. Der Sockel kann über mehrere am Flansch ausgebildete Löcher mit einer den Durchgang von unten haltenden Stütze befestigt werden. Der dem Flansch benachbarte Rohrabschnitt weist ein Innengewinde auf, in das ein die Unterseite der fertigen Betondecke überragendes Verlängerungsrohr eingeschraubt werden kann. Der Sockel oder das Ende des Verlängerungsrohrs werden zum Schutz des Durchgangs mit einer Klebeabdeckung verschlossen.

Der Erfindung lag daher die Aufgabe zugrunde, ein Futterrohr anzugeben, mittels dessen eine vereinfachte Herstellung eines mit einer Rohrdurchführung zu versehenden Wandabschnittes möglich ist.

Die Erfindung löst die ihr zugrundeliegende Aufgabe bei einem Futterrohr zum Durchführen einer oder mehrerer Leitungen durch einen Wand- oder Bodenabschnitt der vorbezeichneten Gattung, mit den Merkmalen nach Anspruch 1. Insbesondere ist entlang des Rohrkörpers auf seiner Außenfläche ausgehend vom Anschlussflansch mindestens eine Längenskala mit Längenmaßen des Rohrkörpers angeordnet, wobei einem, mehreren oder sämtlichen Längenmaßen jeweils eine Ablängführung zum unterstützten Kürzen der Länge des Rohrkörpers zugeordnet ist, die auf der Außenseite des Rohrkörpers als in Umfangsrichtung verlaufende und in radialer Richtung vorstehende Erhöhung ausgebildet ist. Bei Verwendung des Futterrohrs als Durchführung durch einen Bodenabschnitt bzw. eine Geschossdecke ist das Futterrohr vorzugsweise mit einem Mantelrohr verbunden. Am Anschlussflansch im Verbindungsbereich zum Rohrkörper ist eine umlaufende Vertiefung als Aufnahme für einen Kragen eines in den Rohrkörper einsetzbaren Blinddeckels ausgebildet.

Erfindungsgemäß wird mit dem Vorsehen einer Längenskala auf der Außenfläche und der sich in Umfangsrichtung des Rohrkörpers erstreckenden Ablängführung der Ansatz verfolgt, das Einkürzen des Futterrohres auf die gewünschte Länge, welche vorzugsweise mindestens der herzustellenden Wandstärke entspricht, zu vereinfachen. Mit der Längenskala, welche vorzugsweise Längenmaße entlang des Rohrkörpers ausgehend vom Anschlussflansch angibt, die zumindest bevorzugten Wandstärken entsprechen, kann ein Monteur ohne aufwendiges Anzeichnen der gewünschten Länge an der Außenfläche des Rohrkörpers mit dem Kürzen des Futterrohres beginnen. Mittels der Ablängführung wird der Monteur unterstützt das Trennwerkzeug senkrecht zur Längsachse des Rohrkörpers entlang der Umfangsfläche zu führen bzw. diesem direkt angezeigt, ob das Trennwerkzeug beim Einkürzen des Rohrkörpers gegebenenfalls verläuft. Zudem ist mit dem Ausbilden der Ablängführung als Erhöhung an der Außenseite des Rohrkörpers in diesen Bereichen des Rohrkörpers eine größere Materialdicke erzeugt, entlang derer das Abgleiten des Trennwerkzeuges unterstützt wird. Die Erhöhung kann durch einen Steg ausgebildet werden, der von der Außenfläche vorsteht, oder als Nutflanke ausgebildet sein, da der Nutgrund ebenfalls die Außenfläche mit ausbildet.

Die Längenmaße sind vorzugsweise ab einer vorbestimmten Mindestlänge des Rohrkörpers in definierten Abständen, vorzugsweise alle 10 mm, angeordnet. Alternativ oder zusätzlich sind bestimmte Wandstärken oder Steingrößen auf der Außenfläche des Rohrkörpers angegeben. Vorzugsweise werden im Markt gängige Wandstärken und/oder Mauersteinformate dort vorgesehen. Die auf der Außenfläche des Rohrkörpers angeordnete Längenskala weist durch die insbesondere in Abständen von 10 mm angeordneten Längenmaße eine entsprechend feine Skalierung auf, sodass der Rohrkörper des Futterrohres auf nahezu jedes erdenkliche Längenmaß gekürzt werden kann. Der Rohrkörper, der insbesondere eine Grundlänge von 500 mm aufweist, kann ab zum Beispiel einem Längenmaß von 160 mm vorzugsweise in Abständen von jeweils 10 mm gekürzt werden. Zudem weist die Längenskala ein Längenmaß von 365 mm auf, was einem zum Zeitpunkt der Erfindung gängigen Mauerstein- bzw. Wandstärkenform an der herzustellenden Gebäudewand entsprach.

Vorzugsweise definiert die Ablängführung eine Trennkante zum Entlangführen eines Trennwerkzeuges, wobei der Rohrkörper insbesondere für eines, mehrere oder jedes der Längenmaße ein Anzeigeelement aufweist, mittels dem die dem Längenmaß zugehörige Ablängführung zugewiesen wird. Mithilfe einer solchen Trennkante, welche bevorzugt jedem der auf dem Rohrkörper angeordneten Längenmaße zugeordnet ist, wird das Einkürzen des Rohrkörpers auf das gewünschte Längenmaß weiter vereinfacht. Die Ablängführung bildet mit ihrer am Rohrkörper radial vorstehenden Erhöhung eine größere Materialstärke aus, die einseitig auf das daran entlang zu führende Trennwerkzeug wirkt und das exakte Entlangführen des Trennwerkzeuges, wie beispielsweise einer von Hand geführten Säge, unterstützt. Insbesondere kann mit einer solchen als Trennkante fungierenden Erhöhung einem möglichen Verlaufen des Trennwerkzeuges entgegengewirkt werden.

In einer bevorzugten Ausgestaltung ist am Rohrkörper für jedes der darauf angeordneten Längenmaße ein Anzeigeelement vorgesehen, mittels dem die dem Längenmaß zugehörige Ablängführung zugewiesen wird. Mithilfe des Anzeigeelementes ist auf einfache Weise erkennbar, an welcher Seite der Erhöhung das Trennwerkzeug angesetzt werden muss, um den Rohrkörper und damit das Futterrohr auf das gewünschte Längenmaß zu kürzen. Eine Ausgestaltung der Erfindung sieht vor, dass jedes Anzeigeelement ein in Längsrichtung des Rohrkörpers gerichteter Anzeigepfeil ist, der mit seiner Spitze auf die jeweils dem Längenmaß zugehörige Ablängführung weist. Weitere Anzeigeelemente wie Dreieck, Zeigefinger oder andere sind ebenfalls möglich, wobei die Aufzählung nicht abschließend zu verstehen ist.

Gemäß einer Ausführungsform des Futterrohres weist der Rohrkörper eine Anzahl erster Ablängführungen entlang eines ersten Rohrkörperabschnittes und eine Anzahl zweiter Ablängführungen entlang eines zweiten Rohrkörperabschnittes auf, wobei die beiden Abschnitte vorzugsweise benachbart zueinander angeordnet sind, und wobei weiter vorzugsweise die ersten Ablängführungen eine erste Höhe aufweisen, und die zweiten Ablängführungen eine zweite, von der ersten Höhe verschiedene Höhe aufweisen. Die zweite Höhe ist vorzugsweise geringer als die erste Höhe. Vorzugsweise erstrecken sich die ersten Ablängführungen mit ihrer größeren Höhe über den gesamten Umfang des Rohrkörpers und sind weiter vorzugsweise ausgehend von dem am Rohrkörper nach außen abstehenden Anschlussflansch über eine Mindestlänge des Futterrohres am Rohrkörper entlang angeordnet. Mit der Höhe ist der Radius zur Außenkante des Rohrkörpers bzw. des Futterrohres in Bezug zur Seelenachse gemeint.

Vorzugsweise bilden die ersten Ablängführungen eine Stegdichtung an der Außenseite des Rohrkörpers aus, welche dem den Anschlussflansch aufweisenden, ersten Ende des Rohrkörpers zugeordnet ist. Mit Hilfe der Stegdichtung soll vorzugsweise der Durchtritt von Feuchtigkeit entlang der Außenseite des Futterrohres ausgehend von der Außenseite des Wandabschnittes in Richtung der Innenseite des Wandabschnittes zumindest behindert, bevorzugt vermieden werden. Vorzugsweise bildet jede der am ersten Rohrkörperabschnitt umlaufend radial nach außen abstehenden Ablängführungen einen Dichtsteg der Stegdichtung aus, der mit der zur Herstellung des Wandabschnittes verwendeten Vergussmasse, insbesondere dem am Installationsort verwendeten Ortbeton in Kontakt gelangt.

Gemäß einer Ausgestaltung des Futterrohres hat der erste Rohrkörperabschnitt mit seiner Stegdichtung eine axiale Länge von mindestens 160 mm, und der axiale Abstand zwischen den benachbarten Dichtstegen beträgt bevorzugt 20 mm. Die axiale Länge des ersten Rohrkörperabschnittes mit seiner Stegdichtung ist so dimensioniert, dass bei der Herstellung eines Wandabschnittes unter Verwendung von Fertigbetonteilen der erste Rohrkörperabschnitt innenseitig über den die Gebäudeaußenseite des Wandabschnittes ausbildenden Fertigbeton-Abschnitt vorragt. Damit ist bewirkt, dass der erste Rohrkörperabschnitt mit seinen als Dichtstegen ausgebildeten Ablängführungen zumindest entlang eines Abschnittes von der zwischen den Fertigbeton-Abschnitten einzufüllenden Vergussmasse (Ortbeton) umgeben ist.

Vorzugsweise ist der Abstand zwischen den einzelnen als Dichtstege ausgebildeten Ablängführungen so gewählt, dass die Vergussmasse zwischen die Dichtstege eintreten und bis auf die Außenfläche des Rohrkörpers fließen kann. Der axiale Abstand zwischen den ersten Ablängführungen beträgt mindestens 20 mm.

Eine bevorzugte Ausgestaltung des Futterrohres sieht vor, dass der Rohrkörper an seiner Außenfläche mindestens einen Dichtungssitz für ein damit abdichtend in Anlage bringbares Dichtelement, vorzugsweise zwischen zwei Ablängführungen, aufweist, wodurch der Durchtritt von Feuchtigkeit von der Gebäudeaußenseite in Richtung der Gebäudeinnenseite weiter erschwert wird. Der Dichtungssitz ist vorzugsweise zur dichtenden Anlage an einem Elastomerdichtring zum Abdichten gegen Gas- und Wasserdurchtritt, insbesondere zum Erschweren eines Durchtritts von Radon eingerichtet. Entlang mindestens eines oder mehrerer Abschnitte des Rohrkörpers weist dieser insbesondere zwischen zwei Ablängführungen eine Oberfläche auf, die über den gesamten Umfang des Rohrkörpers frei von etwaigen Erhöhungen oder Vorsprüngen ist. Damit kann ein separates mit der Außenfläche des Rohrkörpers in Kontakt bringbares Dichtelement, wie beispielsweise eine Elastomerdichtung, mit der vollständig glatten Außenfläche des Futterrohres abdichtend in Anlage gebracht werden. Alternativ oder zusätzlich sind eine oder mehrere thermoplastische Dichtelemente an die Außenfläche des Futterrohrs angeformt, etwa aus Mehrkomponentenwerkstoffen, beispielsweise mittels Anspritzen, etwa bei der Herstellung des Futterrohres im Spritzgussverfahren.

Gemäß einer Weiterbildung des Futterrohres weist der Rohrkörper zusätzlich zu den Ablängführungen auf seiner Außenfläche in axialer Richtung verlaufende Erhöhungen als Verstärkungsstreben bzw. Verrippungen auf. Mit den bevorzugt mehreren über den Umfang des Rohrkörpers verteilt angeordneten und sich in axialer Richtung erstreckenden Erhöhungen ist die Steifigkeit bzw. Festigkeit des Futterrohres verbessert. Insbesondere bei einer in Längsrichtung wirkenden Scheiteldruckbelastung oder bei einer Schlag- bzw. Stoßbelastung durch die beim Herstellen des Wandabschnittes mit dem Futterrohr in Kontakt kommende Vergussmasse wird einer Verformung des Rohrkörpers quer zu seiner Erstreckung entgegengewirkt. Die in axialer Richtung verlaufenden Erhöhungen oder Rippen weisen vorzugsweise eine geringere Höhe auf als die an der Außenseite des Rohrkörpers in Umfangsrichtung verlaufenden Erhöhungen zum Ausbilden der zweiten Ablängführungen, damit durch die in Umfangsrichtung verlaufenden Ablängführungen eine gute Sägeführung gewährleistet bleibt. Die reduzierte Höhe minimiert zudem das Risiko, dass sich Feuchtigkeit entlang der axial verlaufenden Erhöhungen ausbreitet.

Vorzugsweise weist der Anschlussflansch ausgehend vom Rohrkörper eine Anschlussfläche mit einer Breite in radialer Richtung von wenigstens 30 mm auf, vorzugsweise wenigstens 50 mm auf.

Mit einer Mindestbreite von 30 mm oder mehr, vorzugsweise 50 mm oder mehr, ist ein ausreichend großer Anbindungsbereich für eine auf den Wandabschnitt aufgetragenen Flächendichtung mit der Anschlussfläche des Anschlussflansches des Futterrohres ausgebildet. Vorzugsweise ist der Anschlussflansch des Rohrkörpers der Wandseite des zu erzeugenden Wandabschnittes zugeordnet, welche die Gebäudeaußenseite definiert.

Der Anschlussflansch ist vorzugsweise als Klebeflansch oder als Anspachtelflansch ausgebildet. Unter einem Anspachtelflansch ist ein Flansch mit einer Anschlussfläche mit einer oder mehreren anspachtelfähigen Oberflächenbereichen zu verstehen. Der Klebe- oder Anspachtelflansch ist vorzugsweise dazu eingerichtet, mit einem der folgenden Materialien beschichtet zu werden: kunststoffmodifizierte Bitumendickbeschichtung (PMBC/KMB), kaltselbstklebende Bitumenbahn, flexibler mineralischer Dichtungsschlamm (MDS) oder Flüssigkunststoff (Epoxidharzbeschichtungen) (FLK).

Gemäß einer bevorzugten Weiterbildung weist der Anschlussflansch eine regelmäßig oder unregelmäßig strukturierte Oberfläche für eine Stoffschlussverbindung mit einer damit koppelbaren Flächendichtung auf. Mit der strukturierten Oberfläche ist ein Stoffschluss zwischen dem Anschlussflansch und der damit verbindbaren Flächendichtung verbessert und eine dauerhaft abdichtende Verbindung zwischen dem Futterrohr und einer insbesondere auf der Außenseite des Wandabschnittes aufgetragenen Flächendichtung erzielt. Damit ist das Abdichten im Bereich einer durch den Wandabschnitt geführten Leitung verbessert. Eine regelmäßig strukturierte Oberfläche kann beispielsweise eine genoppte oder gerippte Oberfläche am Anschlussflansch sein. Unter einer unregelmäßig strukturierten Oberfläche wird zum Beispiel eine genarbte Oberfläche am Anschlussflansch verstanden. Als Flächendichtung kann beispielsweise ein Bahnmaterial nach DIN 18533-2:2017-07 oder ein flüssig zu verarbeitender Abdichtstoff nach DIN 18533-3:2017-07 verwendet werden.

Eine Weiterbildung des Futterrohres sieht vor, dass der Anschlussflansch ein oder mehrere Befestigungslaschen aufweist, wobei die Befestigungslaschen vorzugsweise am Anschlussflansch radial nach außen abstehen. Mithilfe der Befestigungslaschen am Anschlussflansch, welche Durchbrüche zum Aufnehmen von Befestigungsmitteln, wie beispielsweise Schrauben oder Nägeln bzw. Stahlstifte, haben können, erfolgt insbesondere das Befestigen des Futterrohres an einem zur Herstellung für den Wandabschnitt zu verwendenden Schalungsteil, wie einer Wandschalung. Während des Herstellens des Wandabschnittes liegt der Anschlussflansch des Futterrohres bündig an dem den Wandabschnitt begrenzenden Schalungsteil an, sodass nach dem Erzeugen des Wandabschnittes der Anschlussflansch mit seiner Anschlussfläche flächenbündig zu der ihm zugeordneten Wandfläche des Wandabschnittes verläuft. In einer bevorzugten Ausgestaltung erstrecken sich, um die gewünschte Mindestbreite von 50 mm der Anschlussfläche gewährleisten zu können, die Befestigungslaschen vom Anschlussflansch aus radial nach außen. Vorzugsweise sind mehr als zwei, drei, insbesondere vier Befestigungslaschen am Anschlussflansch angeordnet, die bevorzugt gleichmäßig über den Umfang des Anschlussflansches verteilt sind.

Gemäß einer bevorzugten Ausführungsform des Futterrohres sind die Befestigungslaschen mittels einer Sollbruchstelle, insbesondere einer Sollbruchfassung, am Anschlussflansch angeordnet. Damit ist gewährleistet, dass nach dem Herstellen des Wandabschnittes und dem sich daran anschließenden Ausschalvorgang, wobei das Schalungsteil von dem hergestellten Wandabschnitt getrennt wird, die Befestigungslaschen über die Sollbruchstelle kontrolliert vom Anschlussflansch abgetrennt werden und somit ein Beschädigen des Anschlussflansches und seiner Anschlussfläche vermieden ist.

Vorzugsweise sind an dem Befestigungsflansch mehrere den Befestigungsflansch mit dem Anschlussflansch des Futterrohres verbindende Sollbruchstellen vorgesehen. Die strukturelle Verbindung zwischen dem Befestigungsflansch und dem Anschlussflansch wird über zwei oder mehr dünne Materialstege erzeugt, die genügen, um die normalerweise auf die Befestigungslaschen wirkenden Kräfte während der Verwendung des Futterrohres aufnehmen zu können. Vorzugsweise ist der Befestigungsflansch von angrenzenden Bereichen des Anschlussflansches mittels den Befestigungsflansch umgebenden Materialdurchbrüche abgetrennt. Die Materialdurchbrüche und Verbindungsstege bilden eine Art Sollbruchfassung für jede der Befestigungslaschen am Anschlussflansch aus.

Gemäß einer bevorzugten Ausgestaltung des Futterrohres sind entlang des Rohrkörpers ein oder mehrere, weitere Befestigungslaschen angeordnet. Mithilfe der am Rohrkörper ausgebildeten Befestigungslaschen ist eine feste Verbindung mit einer innerhalb des zu erzeugenden Wandabschnittes verlaufenden Bewehrung möglich. Die Befestigungslaschen am Rohrkörper sind als etwa senkrecht zu den Ablängführungen verlaufende Materialstege ausgebildet. Vorzugsweise können die Befestigungslaschen am Rohrkörper als Ösen oder in einer möglichen Ausgestaltung auch als Blindlaschen, die im Bedarfsfall mit Durchbrüchen versehen werden ausgebildet sein. Vorzugsweise sind an drei Positionen entlang des Rohrkörpers jeweils zwei Befestigungslaschen vorgesehen, die auf einander gegenüberliegenden Umfangsbereichen des Rohrkörpers angeordnet sind.

Erfindungsgemäß ist am Anschlussflansch im Verbindungsbereich zum Rohrkörper eine umlaufende Vertiefung als Aufnahme für einen Kragen eines in den Rohrkörper einsetzbaren Blinddeckels ausgebildet. Mithilfe eines insbesondere innenseitig in den Rohrkörper einsetzbaren Blinddeckels ist ein temporärer Verschluss des Futterrohres möglich. Die Vertiefung am Anschlussflansch ist so dimensioniert, dass der mit dem Futterrohr korrespondierende Blinddeckel in seiner in den Rohrkörper eingesetzten Stellung zumindest bündig mit der Anschlussfläche des Anschlussflansches abschließt. Damit ist selbst bei Verwendung eines die Durchführung verschließenden Deckels am Futterrohr ein flächenbündiges Aufsetzen des Anschlussflansches an ein damit zu verbindendes Schalungsteil erreicht.

In einer weiteren bevorzugten Ausführungsform weist das Futterrohr einen endseitigen Verschluss auf, wobei der Verschluss vorzugsweise als Blinddeckel ausgebildet ist, welcher mittels einer Soll-Trennstelle mit dem Rohr verbunden ist. Damit ist das Futterrohr ab Werk staub- und fluiddicht verschlossen, und zugleich kann der Blinddeckel mit einfachen Mitteln ausgeschlagen oder herausgeschnitten werden, wenn der Einbau eines Dichteinsatzes oder dergleichen auf der Baustelle ansteht.

Eine Weiterbildung des Futterohres sieht vor, dass der Rohrkörper von seinem den Anschlussflansch aufweisenden, ersten Ende aus in Richtung des gegenüberliegenden zweiten Endes einen sich zumindest innenseitig vorzugsweise konisch verringernden Querschnitt aufweist. Mithilfe der konischen Ausgestaltung der insbesondere eine glatte Oberfläche aufweisenden Innenfläche des Rohrkörpers ist insbesondere eine verbesserte Aufnahme von in den Innendurchmesser des Rohrkörpers einzusetzenden Dichtungseinsätzen bewirkt. Speziell bei einer Druckbeaufschlagung von der Gebäudeaußenseite auf ein in die Durchführung des Rohrkörpers eingesetzten Dichtungseinsatz wird durch den sich geringfügig verringernden Innendurchmesser in Richtung des zweiten Endes des Rohrkörpers der Dichtungseinsatz die Dichtleistung gesteigert. Vorzugsweise weist die Innenoberfläche des Rohrkörpers eine Konizität mit einem Winkel im Bereich von vorzugsweise 0,1° bis 0,5° auf.

Gemäß einer bevorzugten Ausführungsform des Futterrohres weist der zweite Rohrkörperabschnitt an seinem freien Ende eine im Querschnitt gegenüber dem ersten Rohrkörperabschnitt vergrößerte Muffe zum Aufnehmen eines in die Muffe einsetzbaren Verlängerungsrohres auf. Mithilfe der Verlängerungsmuffe, welche sich bei einer Gesamtlänge des Futterrohres von 500 mm über einen Abschnitt von etwa 100 mm erstreckt, ist eine einfache Verbindung mit einem darin einsetzbaren Rohr erreicht. Der Innendurchmesser der Muffe ist so dimensioniert, dass dieser mit dem Außendurchmesser eines in die Muffe einschiebbaren Verlängerungsrohres abdichtend korrespondiert.

Vorzugsweise weist die Muffe einen freien Querschnitt auf, der sich vom offenen Ende der Muffe in Richtung des ersten Rohrkörperabschnittes verringert, vorzugsweise konisch verjüngt. Zum einen dient der sich konisch verjüngende freie Querschnitt der Muffe zum Toleranzausgleich und bewirkt beim Einschieben eines in die Muffe einzusetzenden Verlängerungsrohres ein selbsttätiges Verklemmen der Außenfläche des Rohres mit der Innenfläche der Muffe des Futterrohres. Vorzugsweise weist die Muffe eine Konizität mit einem Winkel im Bereich von 0,3° und 2° auf. Eine bevorzugte Ausgestaltung des Futterrohres sieht vor, dass auch die sich im Querschnitt erweiternde Muffe am zweiten Rohrkörperabschnitt auf ihrer Außenfläche eine Längenskala mit Längenmaßen des Rohrkörpers umfasst, wobei vorzugsweise sämtlichen Längenmaßen jeweils eine Ablängführung zum unterstützten Kürzen der Länge des Rohrkörpers zugeordnet ist. Die Ablängführungen sind auf der Außenseite der Muffe bevorzugt ebenfalls als in Umfangsrichtung verlaufende und in radialer Richtung vorstehende Erhöhungen ausgebildet.

Gemäß einer bevorzugten Weiterbildung weisen der Anschlussflansch und/oder die ersten Ablängführungen wenigstens ein Paar einander diametral gegenüberliegender Abflachungen auf. Mithilfe solcher am Anschlussflansch und/oder an den ersten Ablängführungen ausgebildeten Abflachungen ist eine zum Teil ebene Auflagefläche am Futterrohr erzeugt, mittels derer ein ungewollt selbsttätiges Wegrollen des Futterrohres vermieden werden kann.

Zudem ermöglichen insbesondere die Abflachungen an den ersten Ablängführungen das Einspannen des Futterrohres oder beispielsweise ein kippfreies Anlegen eines Messmittels, wie einer Wasserwaage. Vorzugsweise weist der Flansch und/oder die ersten Ablängführungen mindestens zwei Paar solcher Abflachungen auf, welche in einem Winkel von etwa 90° versetzt zueinander an dem eine bevorzugt kreisförmige äußere Umfangsfläche aufweisenden Anschlussflansch und/oder Ablängführungen ausgebildet sind.

Eine bevorzugte Ausgestaltung des Futterrohres sieht vor, dass dieses als ein einteiliges, spritzgegossenes Kunststoffteil ausgebildet ist. Die vor allem einteilige Ausgestaltung des Futterrohres aus Kunststoff vereinfacht das Herstellen eines solch erfindungsgemäß ausgebildeten Futterrohres. Zudem lassen sich unter Verwendung eines Kunststoffes insbesondere die am Anschlussflansch und dem Rohrkörper auszubildenden erfindungsgemäßen Komponenten, wie beispielsweise die über die Sollbruchfassung mit dem Flansch verbundenen Befestigungslaschen, wie auch die unterschiedliche Höhen aufweisenden Ablängführungen auf einfache Weise am Futterrohr ausbilden. Zudem kann ein aus einem Kunststoffmaterial ausgebildetes Futterrohr einfach auf das gewünschte Längenmaß eingekürzt werden, das insbesondere der Wandstärke des herzustellenden Wandabschnittes entspricht.

In einer weiteren bevorzugten Ausführungsform weist das Futterrohr zur Aufnahme und Einschubbegrenzung eines Dichteinsatzes in seinem Inneren einen partiell oder vollständig umlaufenden Anschlag auf, wobei vorzugsweise der Anschlag in einem Bereich von 100 mm oder weniger, besonders bevorzugt in einem Bereich von 50 mm bis 100 mm, von einem der Rohrenden entfernt positioniert ist.

Die Erfindung betrifft in einem zweiten Aspekt eine Futterrohranordnung mit zwei oder mehr Futterrohren.

Die Erfindung löst die eingangs angegebene Aufgabe bei einer solchen Futterrohranordnung, indem eines, mehrere oder sämtliche der Futterrohre nach einer der vorstehend beschriebenen bevorzugten Ausführungsformen des ersten Aspekts ausgebildet sind, wobei die Futterrohre zueinander benachbart aufgereiht sind.

Der zweite Aspekt macht sich hierbei dieselben Vorteile zunutze wie das Futterrohr des ersten Aspekts. Bevorzugte Ausführungsformen des ersten Aspekts sind zugleich bevorzugte Ausführungsformen des zweiten Aspekts und umgekehrt, weswegen zur Vermeidung von Wiederholungen diesbezüglich auf die obigen Ausführungen verwiesen wird.

In einer bevorzugten Ausführungsform sind die Anschlussflansche der Rohre mit jeweils mindestens einem benachbarten Anschlussflansch auf Stoß angeordnet, wobei die Anschlussflansche vorzugsweise mittels miteinander korrespondierender Befestigungsmittel verbunden sind, vorzugsweise mittels miteinander korrespondierender Rastelemente.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Ausführungsform eines erfindungsgemäßen Futterrohres;
- Fig. 2:: eine Schnittdarstellung des erfindungsgemäßen Futterrohres nach Fig. 1 im Einbauzustand;
- Fig. 3:: eine Vorderansicht des Futterrohres nach Fig. 1, welche die Ausgestaltung der Ablängführungen und der Längenskala auf der Außenfläche des Rohrkörpers verdeutlicht;
- Fig. 4:: eine Ansicht der Einzelheit IV aus Fig. 3;
- Fig. 5:: eine Ansicht der Einzelheit V aus Fig. 3;
- Fig. 6:: eine Seitenansicht des Futterrohres auf den am ersten Ende des Rohrkörpers angeordneten Anschlussflansch;
- Fig. 7:: eine Ansicht der Einzelheit VII aus Fig. 6;
- Fig. 8:: eine perspektivische Ansicht des Futterrohres aus Fig. 1 mit einem mit dem Rohrkörper verbundenen Verlängerungsrohr;
- Fig. 9:: eine Schnittdarstellung eines Futterrohrs gemäß einem zweiten Ausführungsbeispiel;
- Fig. 10:: eine Seitenansicht des Futterrohrs gemäß Fig. 9;
- Fig. 11:: eine Detail-Schnittdarstellung des Futterrohrs gemäß Fig. 9 und Fig. 10;
- Fig. 12;: eine weitere Detail-Schnittdarstellung des Futterrohrs gemäß Fig. 9 bis Fig. 11; und
- Fig. 13:: eine Seitenansicht einer Futterrohranordnung.

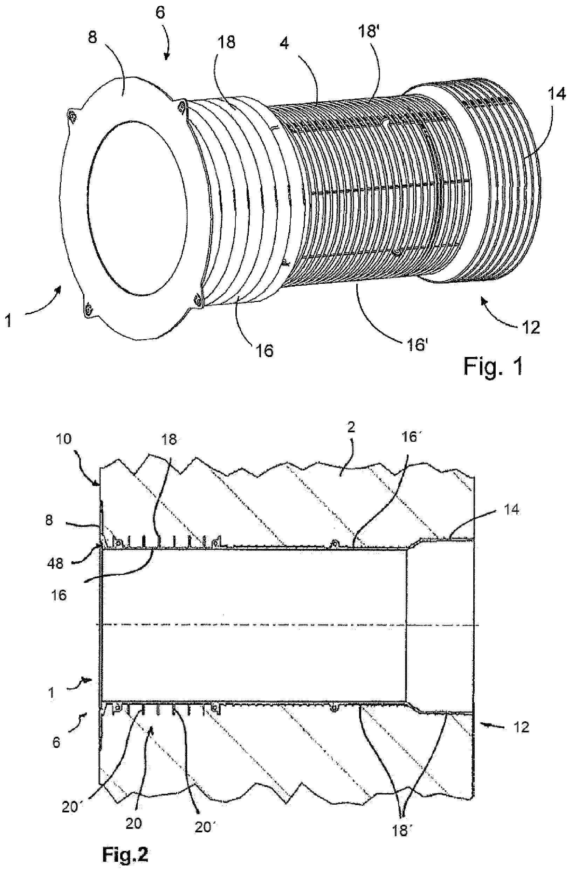

Fig. 1 zeigt ein Futterrohr 1 zum Durchführen einer oder mehrerer, nicht näher gezeigter Leitungen durch einen Wandabschnitt 2 (Fig. 2). Das Futterrohr 1 umfasst einen Rohrkörper 4 und einen an einem ersten Ende 6 des Rohrkörpers 4 angeordneten Anschlussflansch 8, der dazu eingerichtet ist, bündig mit einer Wandfläche 10 (Fig. 2) des Wandabschnittes 2 abzuschließen. Der Rohrkörper 4 umfasst in einer möglichen Ausgestaltung des Futterrohres an seinem zweiten Ende 12 eine Muffe 14. Die Muffe 14 weist gegenüber dem sich zwischen dem Anschlussflansch 8 und der Muffe 14 erstreckenden Rohrkörperabschnitt 16 einen erweiterten Querschnitt auf.

Der Rohrkörper 4 weist einen ersten Rohrkörperabschnitt 16 und einen zweiten Rohrkörperabschnitt 16' auf, wobei entlang des ersten und des zweiten Rohrkörperabschnittes in Umfangsrichtung verlaufende und in radialer Richtung vorstehende Erhöhungen 18, 18' ausgebildet sind.

Fig. 2 zeigt das Futterrohr 1 im Einbauzustand in einem bevorzugt vollständig aus einer Vergussmasse, wie beispielsweise aus Ortbeton, hergestellten Wandabschnitt 2. Das Futterrohr 1 ist mit seiner ungekürzten Länge in einem eine Wandstärke von etwa 500 mm aufweisenden Wandabschnitt 2 verbaut.

Wie aus Fig. 2 zu entnehmen, greift die aushärtende Vergussmasse insbesondere zwischen die Erhöhungen 18 am ersten Rohrkörperabschnitt 16 ein. Die insbesondere umlaufend ausgebildeten Erhöhungen 18 am ersten Rohrkörperabschnitt 16 bilden eine Stegdichtung 20 mit mehreren in axialer Richtung hintereinander angeordneten Dichtstegen 20' aus, mittels der eine abdichtende Verbindung zwischen der Außenseite des Rohrkörpers 4 und dem den Rohrkörper 4 umgebenden Wandabschnitt 2 erzeugt wird.

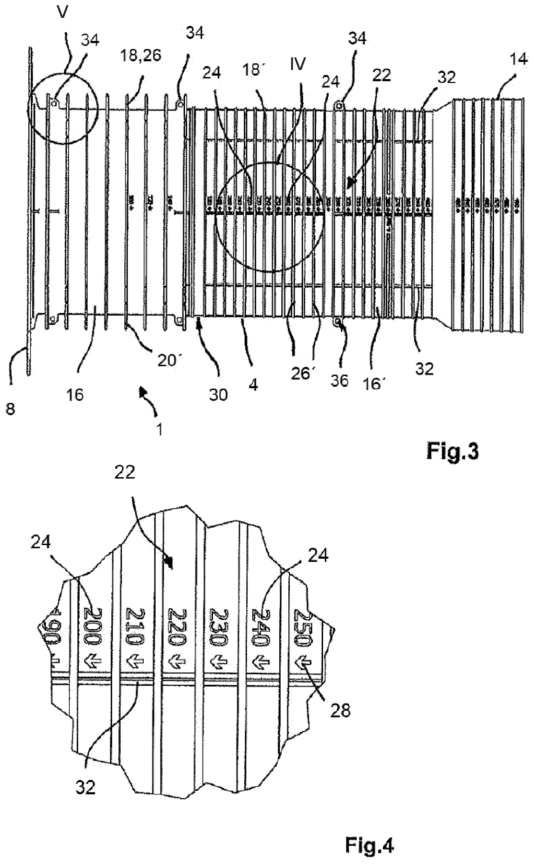

Die in Fig. 3 gezeigte Ansicht des Futterrohres 1 verdeutlicht, dass entlang des Rohrkörpers 4 auf seiner Außenfläche, ausgehend vom Anschlussflansch 8, mindestens eine Längenskala 22 mit einer Vielzahl von auf dem Rohrkörper 4 angeordneten Längenmaßen 24 angeordnet bzw. ausgebildet ist. Einem, mehreren oder sämtlichen Längenmaßen ist jeweils eine Ablängführung 26, 26' zum unterstützten Kürzen der Länge des Rohrkörpers 4 zugeordnet. In der vorliegend gezeigten Ausführungsform sind die Ablängführungen 26, 26' durch die in Umfangsrichtung verlaufenden und in radialer Richtung am Rohrkörper 4 vorstehenden Erhöhungen 18, 18' ausgebildet.

Der Rohrkörper 4 weist eine Anzahl erster Ablängführungen 26 entlang des ersten Rohrkörperabschnittes 16 und eine Anzahl zweiter Ablängführungen 26` entlang des zweiten Rohrkörperabschnittes 16' auf. Die ersten Ablängführungen 26 haben eine Höhe, die in der vorliegend gezeigten Ausführungsform größer ist als die Höhe der zweiten Ablängführungen 26`. Vorliegend weisen die ersten Ablängführungen eine Höhe von etwa 20 mm auf. Die zweiten Ablängführungen 26` sind Erhöhungen 18` mit einer Höhe in radialer Richtung am zweiten Rohrkörperabschnitt 16`, welche eine umlaufende Höhe von etwa 2 mm an der Außenfläche des Rohrkörpers 4 haben.

Der erste Rohrkörperabschnitt 16 mit seiner daran ausgebildeten Stegdichtung 20' weist eine axiale Länge von mindestens 160 mm auf. Der Abstand zwischen den Ablängführungen 26 am ersten Rohrkörperabschnitt 16 beträgt in der gezeigten Ausführung 20 mm. Der Abstand zwischen den Ablängführungen 26` am zweiten Rohrkörperabschnitt 16', wobei auch die Muffe 14 als zum zweiten Rohrkörperabschnitt 16' gehörend anzusehen ist, sind in einem Abstand von 10 mm zueinander auf der Außenfläche des Rohrkörpers 4 angeordnet. Die Muffe 14 weist einen freien Querschnitt auf, der sich vom offenen Ende der Muffe 14 in Richtung des ersten Rohrkörperabschnittes 16 verringert, vorzugsweise konisch verjüngt.

Wie aus Fig. 3 zudem ersichtlich, ist auf der Außenfläche des Rohrkörpers 4 ein Längenmaß von 365 mm angeordnet, was einer der gängigen Wandstärken für einen herzustellenden Wandabschnitt entspricht. Mithilfe der Ablängführungen 26, 26` werden, wenn das Futterrohr 1 auf eine gewünschte Länge gekürzt werden muss, vorliegend Trennkanten zum Entlangführen eines den Rohrkörper 4 kürzenden Trennwerkzeuges definiert.

Wie aus der in Fig. 4 gezeigten Einzelheit IV zu entnehmen ist, weist in einer bevorzugten Ausführungsform der Rohrkörper 4 für mindestens eines, mehrere oder jedes der Längenmaße ein Anzeigeelement 28 in Form eines Anzeigepfeiles auf, das die dem Längenmaß zugehörige Ablängführung zuweist.

In einer vorliegend gezeigten Ausführungsform weist der Rohrkörper 4, wie Fig. 3 ferner zeigt, an seiner Außenfläche mindestens einen Dichtungssitz 30 für ein nicht näher dargestelltes Dichtungselement, wie beispielsweise eine Elastomerdichtung, auf. Der Dichtungssitz 30 ist insbesondere zwischen zwei Ablängführungen 26` ausgebildet, wobei die Außenfläche im Bereich des Dichtungssitzes vollständig frei von außen am Rohrkörper 4 vorstehenden Erhöhungen oder Vorsprüngen ist. Der Dichtungssitz 30 ist vorzugsweise ein glatter ringförmiger Abschnitt auf der Außenfläche des Rohrkörpers 4.

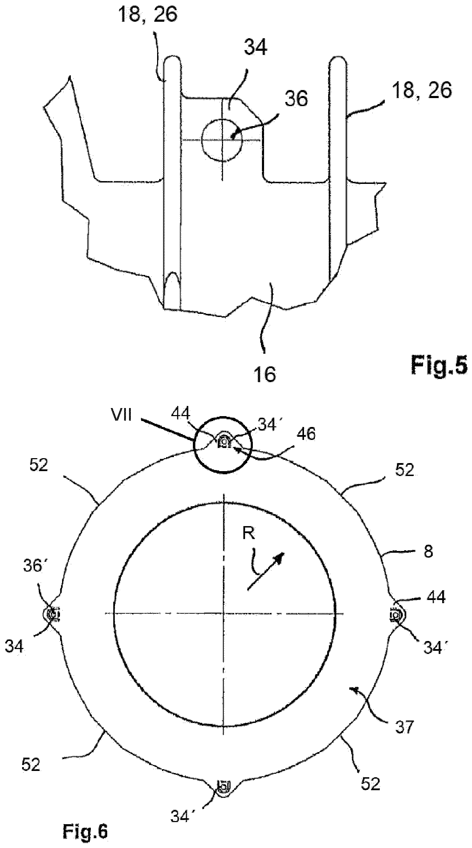

In einer Ausgestaltung der in Fig.3 gezeigten Erfindung weist der Rohrkörper 4 zusätzlich zu den Ablängführungen 26, 26' auf seiner Außenfläche in axialer Richtung verlaufende Erhöhungen 32 als Verstärkungsstreben, oder Versteifungsrippen, für den Rohrkörper 4 auf. Entlang des Rohrkörpers 4 können, wie im Detail in Fig. 5 gezeigt, zudem ein oder mehrere Befestigungslaschen 34 angeordnet sein, mittels derer der Rohrkörper 4 an einer zum Herstellen des Wandabschnittes 2 verwendeten, nicht näher gezeigten Bewehrung befestigt werden kann. Die Befestigungslaschen 34 weisen Durchbrüche 36 auf, durch die zum Beispiel ein Befestigungsdraht hindurchgeführt werden kann.

Der in Fig. 6 gezeigte Anschlussflansch 8 des Futterrohres 1, das ein einteiliges, spritzgegossenes Kunststoffteil ist, ist vorzugsweise als Klebeflansch oder Anspachtelflansch ausgebildet. Der Anschlussflansch 8 weist insbesondere ausgehend vom Rohrkörper eine Anschlussfläche 37 mit einer Breite in radialer Richtung R von wenigstens 50 mm auf, was die Anbindung einer Flächendichtung an den Anschlussflansch 8 ermöglicht.

Um die Anbindung der Flächendichtung über bevorzugt eine Stoffschlussverbindung zu bewirken, weist der Anschlussflansch 8 eine regelmäßig oder unregelmäßig strukturierte Oberfläche seiner Anschlussfläche 37 auf.

In einer möglichen, in Fig. 6 gezeigten Ausgestaltung weist der Anschlussflansch 8 mindestens eine, vorliegend vier Befestigungslaschen 34` mit Durchbrüchen 36` auf, welche dazu eingerichtet sind, mit Befestigungsmitteln, wie beispielsweise Schrauben oder Nägeln bzw. Stahlstiften, zu korrespondieren, um den Anschlussflansch 8 an einem zum Herstellen des Wandabschnittes 2 verwendeten nicht näher gezeigten Schalungsteil befestigen zu können.

In der gezeigten Ausführung stehen die Befestigungslaschen 34' vorzugsweise radial am Anschlussflansch 8 nach außen vor. Damit weist der Anschlussflansch 8 eine für die Anbindung einer Flächendichtung unbeeinträchtigte Anschlussfläche 37 auf.

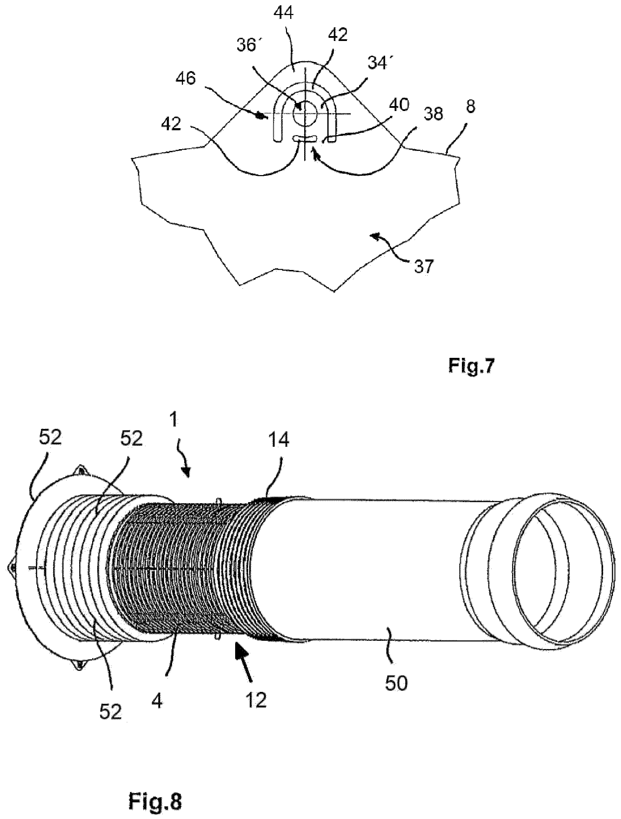

Wie aus Fig. 7 zu entnehmen, sind die Befestigungslaschen 34' mit ihren Durchbrüchen 36` über Sollbruchstellen 38 in Form von schmalen Verbindungstegen 40 mit den angrenzenden Bereichen des Anschlussflansches 8 verbunden. Darüber hinaus grenzen sich die Befestigungslaschen 34' durch Materialausnehmungen 42 gegenüber dem Anschlussflansch 8 ab. Um Beschädigungen an den am Anschlussflansch 8 abstehenden Befestigungslaschen 34` zu vermeiden, weist der Anschlussflansch 8 die Befestigungslaschen 34` umgebende Materialeinfassungen 44 auf.

Mittels zumindest der als Verbindungsstege 40 ausgebildeten Sollbruchstellen 38 und der Materialausnehmungen 42 ist eine Sollbruchfassung 46 für die Befestigungslaschen 34` am Anschlussflansch 8 ausgebildet.

In einer Ausführungsform ist unter Bezugnahme auf Fig. 2 im Verbindungsbereich zwischen dem Rohrkörper 4 und dem Anschlussflansch 8 eine Vertiefung 48 als Aufnahme für einen Kragen eines innenseitig in den Rohrkörper 4 einsetzbaren, nicht näher gezeigten Blinddeckels ausgebildet. Die Vertiefung 48 ist umlaufend und so dimensioniert, dass der korrespondierende Blinddeckel in seiner eingesetzten Stellung bündig oder leicht vertieft mit dem Anschlussflansch 8 abschließt.

Der Rohrkörper 4 weist in einer möglichen Ausführungsform innenseitig einen vom ersten Ende 6 in Richtung des zweiten Endes 12 sich verringernden Querschnitt auf. Vorzugsweise verjüngt sich der freie Querschnitt konisch.

Wie aus Fig. 8 ersichtlich, ist die am zweiten Ende 12 angeordnete Muffe 14 zum Aufnehmen eines Verlängerungsrohres 50 eingerichtet. Der Innendurchmesser des an die Muffe 14 angrenzenden Rohrkörpers 4 ist derart auf das als Standardbauteil ausgebildete Verlängerungsrohr 50 abgestimmt, dass ein absatzfreier Übergang zwischen dem Innendurchmesser des Verlängerungsrohres 50 und dem Innendurchmesser des Rohrkörpers 4 ausgebildet ist.

Wie aus Fig. 3 und Fig. 6 ersichtlich, weisen der Anschlussflansch 8 sowie die als Dichtstege 20` bzw. Ablängführungen 26 ausgebildeten Erhöhungen 18 an ihren äußeren Umfangsflächen wenigstens ein Paar einander diametral gegenüberliegender Abflachungen 52 auf. Vorzugsweise sind jeweils zwei Paar solcher Abflachungen 52 am Anschlussflansch 8 und den Erhöhungen 18 ausgebildet. Die Abflachungen 52 weisen im gezeigten Beispiel einen Winkelversatz von etwa 90° zueinander und einen Winkelversatz zu den am Anschlussflansch abstehenden Befestigungslaschen 34` von etwa 45° auf. Es können alternativ aber auch Abflachungen vorgesehen werden, die keinen Winkelversatz aufweisen.

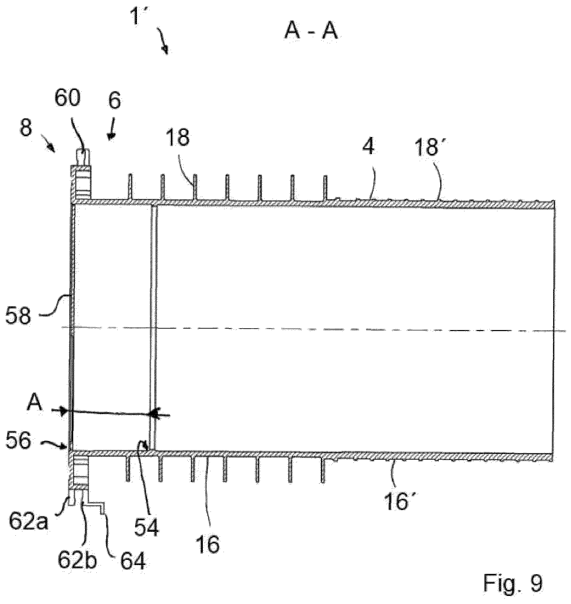

Fig. 9 zeigt ein Futterrohr 1' gemäß einem zweiten Ausführungsbeispiel der Erfindung. Das Futterrohr 1' weist dieselben grundsätzlichen Strukturmerkmale wie das Futterrohr 1 der Fig. 1 bis 8 auf. Bezüglich strukturell und/oder funktional gleicher Merkmale sind dieselben Bezugszeichen vergeben, und es wird zur Vermeidung von Wiederholungen insoweit auf die obigen Ausführungen verwiesen, die auch für die Figuren 9 bis 13 Gültigkeit haben. Nachfolgend werden die Besonderheiten des zweiten Ausführungsbeispiels erläutert.

Das Futterrohr 1' weist einen Anschlag 54 in seinem Inneren auf, der in einem Abstand A im Bereich von 50 mm bis 100 mm vom ersten Rohrende 6 angeordnet ist und als Einschubbegrenzung für entsprechend dimensionierte Dichteinsätze dient.

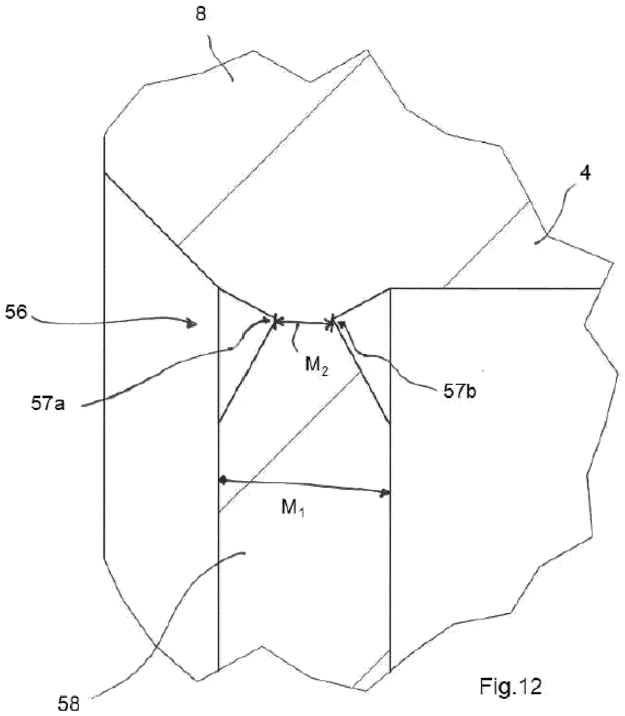

Das Futterrohr 1' weist ferner einen Verschluss 58 als Blinddeckel auf, welcher mittels einer (ersten) Solltrennstelle 56 mit dem Rohrkörper 4 verbunden ist. Die Solltrennstelle 56 wird in Fig. 12 näher gezeigt.

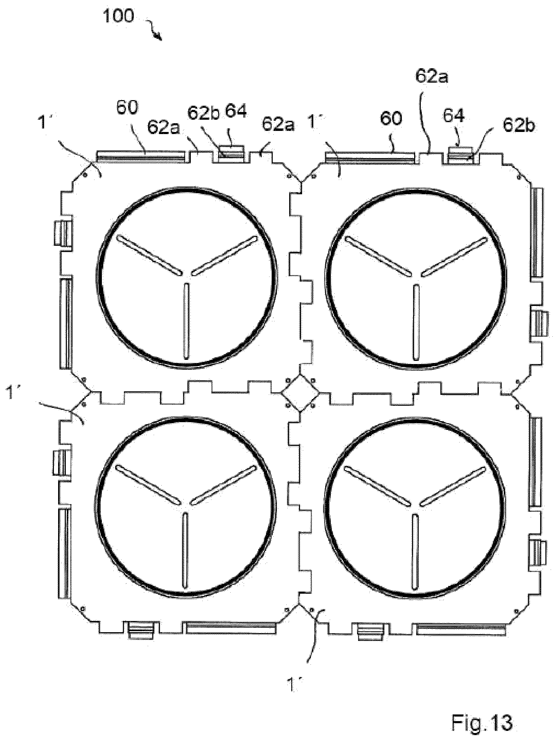

Radial außerhalb der Soltrennstelle 56 ist wiederum der Flansch 8 des Futterrohrs ausgebildet. Im Unterschied zu den Figuren 1 bis 8 weist der Flansch 8 mehrere erste Rastelemente 60 auf, vorzugsweise an jeder Seitenfläche, und mehrere mit den ersten Rastelementen 60 korrespondierende zweite Rastelemente 62a, 62b auf, die gemeinsam derart positioniert sind, dass mehrere Flansche 8, d. h. mehrere Futterrohre 1', einreihig oder mehrreihig aneinander befestigt werden können, beispielsweise so wie in Fig. 13 angedeutet.

Die Rastelemente 62a sind dazu eingerichtet, von einer ersten Seite an die ersten Rastelemente 60 anzugreifen, während die zweiten Rastelemente 62b dazu eingerichtet sind, von einer gegenüberliegenden zweiten Seite an die ersten Rastelemente 60 anzugreifen, so dass die ersten Rastelemente 60 zwischen den zweiten Rastelementen 62a, 62b eingeklemmt werden. Die zweiten Rastelemente 62a, 62b sind vorliegend versetzt zueinander angeordnet. In alternativen Ausführungsformen können die zweiten Rastelemente 62a, 62b aber genauso auch direkt miteinander fluchtend angeordnet sein.

Zur mechanischen Stabilisierung des Futterrohrs 1 weist der Flansch 8 des Futterrohrs 1' an den Seiten, die auch die Rastelemente 60, 62 aufweisen, vorzugsweise an jeweils mindestens einem der zweiten Rastelemente 62b, ein Ankerelement 64 auf, das beim Einbetonieren des Anschlussflansches die mechanische Anbindung an den Wand- oder Bodenabschnitt verbessert.

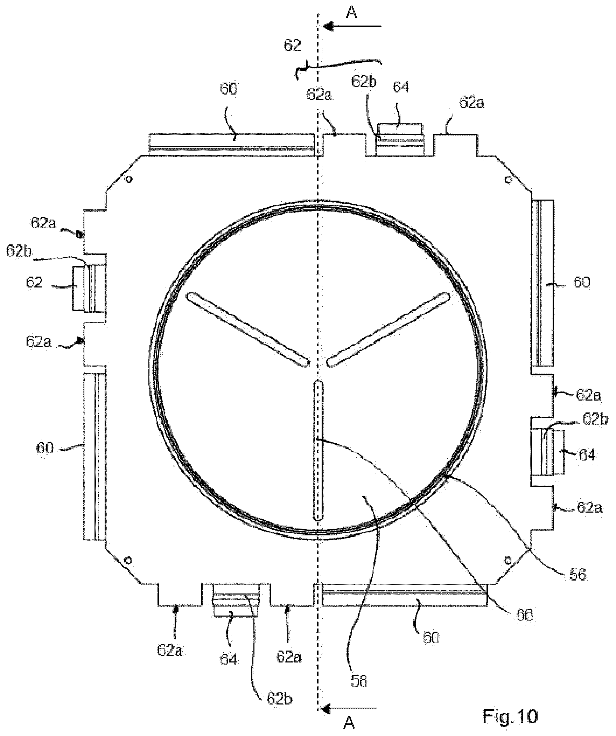

Wie aus Fig. 10 ersichtlich ist, weist der Verschluss 58 ferner eine Mehrzahl von zweiten Solltrennstellen 66 auf, die sich jeweils radial von der Mitte des Verschlusses 58 aus erstrecken. Die Solltrennstellen 66 können als einseitig oder zweiseitig in den Verschluss 58 eingebrachte Materialschwächungen, oder als Schlitze, ausgebildet sein.

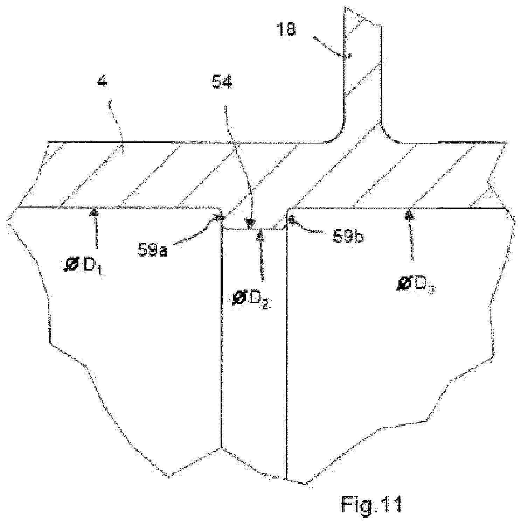

Wie sich aus Fig. 11 näher ergibt, weist der Rohrkörper 4 endseitig einen ersten Durchmesser D₁ bis zum Erreichen einer ersten Flanke 59a auf, und ab einer zweiten Flanke 59b einen dritten Durchmesser D₃, welcher gleich dem ersten Durchmesser D₁ sein kann oder von dem ersten Durchmesser D1 auch abweichen kann. Der Anschlag 54 wird in axialer Richtung durch die beiden Flanken 59a, 59b begrenzt und weist einen zweiten Durchmesser D₂ auf, der geringer als der erste Durchmesser D₁ und geringer als der dritte Durchmesser D3 ist. Die Flanken 59a, 59b erstrecken sich vorzugsweise radial nach innen und sind vorzugsweise mit Übergangsradien innen und/oder außen versehen.

Wie sich aus Fig. 12 näher ergibt, weist der Verschluss 58 eine erste Materialstärke M₁ in axialer Richtung auf. Hier ist die Solltrennstelle 56 als zweiseitige Materialschwächung ausgebildet und weist als solche einen außenseitigen ersten Kerbgrund 57a und einen innenseitigen zweiten Kerbgrund 57b auf, die vorzugsweise auf demselben Teilkreisdurchmesser liegen. Die Solltrennstelle 56 hat eine Materialstärke M₂ zwischen den Kerbgründen 57a, 57b in axialer Richtung, welche geringer als die erste Materialstärke M₁ ist.

In nicht gezeigten, aber ebenso bevorzugten Ausführungsformen kann die (erste) Solltrennstelle 56 als einseitige Materialschwächung ausgebildet sein, oder als partiell unterbrochener umlaufender Schlitz.

Wie sich für die Futterohranordnung gemäß Fig. 13 ergibt, kann durch die erfindungsgemäß am Flansch 8 vorgesehenen korrespondierenden Rastelemente 60, 62 eine beliebig komplexe Struktur aus jeweils benachbarten Futterrohren 1' geschaffen werden. Rein exemplarisch ist eine Futterrohranordnung 100 mit zwei Reihen und zwei Spalten gezeigt, es können aber diverse Kombinationen gebildet werden, weil sich stets ein erstes Rastelemente 60 und ein oder mehrere damit korrespondierende zweite Rastelemente 62a, 62b gegenüberliegen und miteinander reversibel lösbar in Eingriff gebracht werden können.

### Bezugszeichenliste:

- 1, 1': Futterrohr
- 2: Wandabschnitt
- 4: Rohrkörper
- 6: erstes Ende
- 8: Anschlussflansch
- 10: Wandfläche
- 12: zweites Ende
- 14: Muffe
- 16, 16`: Rohrkörperabschnitt
- 18, 18`: Erhöhung
- 20: Stegdichtung
- 20`: Dichtstege
- 22: Längenskala
- 24: Längenmaß
- 26, 26': Ablängführung
- 28: Anzeigeelement
- 30: Dichtungssitz
- 32: Erhöhung
- 34, 34`: Befestigungslasche
- 36, 36': Durchbruch
- 37: Anschlussfläche
- 38: Sollbruchstelle
- 40: Verbindungssteg
- 42: Materialausnehmung
- 44: Materialeinfassung
- 46: Sollbruchfassung
- 48: Vertiefung
- 50: Verlängerungsrohr
- 52: Abflachung
- 54: Anschlag
- 56: (erste) Solltrennstelle
- 58: Verschluss/Blinddeckel
- 59a, 59b: Flanken, Anschlag
- 60: Rastelement
- 62: Rastelemente
- 62a, 62b: Rastelement
- 64: Ankerelement
- 66: (zweite) Solltrennstelle
- 100: Futterrohranordnung

- A: Abstand, Anschlag
- D₁, D₂, D₃: Durchmesser, Rohrkörper innen
- R: radiale Richtung
- M₁, M₂: Materialstärke

## Patentansprüche

1. Futterrohr (1) zum Durchführen einer oder mehrerer Leitungen durch einen Wand- oder Bodenabschnitt (2), mit
- einem Rohrkörper (4), der dazu eingerichtet ist, in einer aushärtbaren Vergussmasse des Wandabschnittes (2) eingebettet zu werden, und
- einem an einem Ende (6) des Rohrkörpers (4) angeordneten Anschlussflansch (8), wobei entlang des Rohrkörpers (4) auf seiner Außenfläche ausgehend vom Anschlussflansch (8) mindestens eine Längenskala (22) mit Längenmaßen (24) des Rohrkörpers (4) angeordnet ist, wobei einem, mehreren oder sämtlichen Längenmaßen (24) jeweils eine Ablängführung (26, 26`) zum unterstützten Kürzen der Länge des Rohrkörpers (4) zugeordnet ist, die auf der Außenfläche des Rohrkörpers (4) als in Umfangsrichtung verlaufende und in radialer Richtung vorstehende Erhöhung (18, 18') ausgebildet ist,
**dadurch gekennzeichnet, dass**
am Anschlussflansch (8) im Verbindungsbereich zum Rohrkörper (4) eine umlaufende Vertiefung (48) als Aufnahme für einen Kragen eines in den Rohrkörper (4) einsetzbaren Blinddeckels ausgebildet ist.

2. Futterrohr nach Anspruch 1,
wobei die Längenmaße (24), insbesondere ab einer vorbestimmten Mindestlänge, des Rohrkörpers (4) in definierten Abständen angeordnet sind und/oder vorbestimmte Wandstärken oder Steingrößen angeben.

3. Futterrohr nach Anspruch 1 oder 2,
wobei der Rohrkörper (4) eine Anzahl erster Ablängführungen (26) in einem ersten Rohrkörperabschnitt (16), und eine Anzahl zweiter Ablängführungen (26') in einem zweiten Rohrkörperabschnitt (16') aufweist, wobei die beiden Abschnitte vorzugsweise benachbart zueinander angeordnet sind, und wobei weiter vorzugsweise die ersten Ablängführungen (26) eine erste Höhe aufweisen, und die zweiten Ablängführungen eine zweite Höhe aufweisen.

4. Futterrohr nach einem der vorstehenden Ansprüche,
**dadurch gekennzeichnet, dass** die ersten Ablängführungen (26) eine Stegdichtung (20) an der Außenfläche des Rohrkörpers (4) ausbilden, welche dem den Anschlussflansch (8) aufweisenden Ende des Rohrkörpers (4) zugeordnet ist.

5. Futterrohr nach einem der vorstehenden Ansprüche,
**dadurch gekennzeichnet, dass** der Rohrkörper (4) an seiner Außenfläche mindestens einen Dichtungssitz (30) für ein damit abdichtend in Anlage bringbares Dichtelement, vorzugsweise zwischen zwei Ablängführungen, aufweist.

6. Futterrohr nach einem der vorstehenden Ansprüche,
**dadurch gekennzeichnet, dass** der Rohrkörper (4) zusätzlich zu den Ablängführungen (26, 26`) auf der Außenfläche des Rohrkörpers (4) ein oder mehrere in axialer Richtung verlaufende Erhöhungen (32) als Verstärkungsstreben aufweist.

7. Futterrohr nach einem der vorstehenden Ansprüche,
**dadurch gekennzeichnet, dass** der Rohrkörper (4) von seinem den Anschlussflansch (8) aufweisenden ersten Ende (6) aus in Richtung des gegenüberliegenden zweiten Endes (12) einen sich zumindest innenseitig vorzugsweise konisch verringernden Querschnitt aufweist.

8. Futterrohr nach einem der vorstehenden Ansprüche,
**dadurch gekennzeichnet, dass** der zweite Rohrkörperabschnitt (16') an seinem freien Ende eine im Querschnitt gegenüber dem ersten Rohrkörperabschnitt (16) vergrößerte Muffe (14) zum Aufnehmen eines Verlängerungsrohres (50) aufweist, wobei vorzugsweise die Muffe (14) einen freien Querschnitt aufweist, der sich vom offenen Ende der Muffe (14) in Richtung des ersten Rohrkörperabschnittes (16) verringert, vorzugsweise konisch verjüngt.

9. Futterrohr nach einem der vorstehenden Ansprüche,
**dadurch gekennzeichnet, dass** der Anschlussflansch (8) eine regelmäßig oder unregelmäßig strukturierte Oberfläche für eine Stoffschlussverbindung mit einer damit koppelbaren Flächendichtung aufweist.

10. Futterrohr nach einem der vorstehenden Ansprüche,
**dadurch gekennzeichnet, dass** der Anschlussflansch (8) ein oder mehrere Befestigungslaschen (34') aufweist, wobei die Befestigungslaschen (34') vorzugsweise am Anschlussflansch (8) radial nach außen abstehen.

11. Futterrohr nach einem der Ansprüche 1 bis 10,
**dadurch gekennzeichnet, dass** das Rohr einen endseitigen Verschluss aufweist, wobei der Verschluss vorzugsweise als Blinddeckel ausgebildet ist, welcher mittels einer Soll-Trennstelle mit dem Rohr verbunden ist.

12. Futterrohr nach einem der vorstehenden Ansprüche,
**dadurch gekennzeichnet, dass** der Anschlussflansch (8) und/oder die ersten Ablängführungen (26) wenigstens ein Paar voneinander diametral gegenüberliegende Abflachungen (52) aufweisen.

13. Futterrohr nach einem der vorstehenden Ansprüche,
**dadurch gekennzeichnet, dass** das Futterrohr zur Aufnahme und Einschubbegrenzung eines Dichteinsatzes in seinem Inneren einen partiell oder vollständig umlaufenden Anschlag aufweist, wobei vorzugsweise der Anschlag in einem Bereich von 100 mm oder weniger, besonders bevorzugt in einem Bereich von 50 mm bis 100 mm, von einem der Rohrenden entfernt positioniert ist.

14. Futterrohranordnung, mit
zwei oder mehr Futterrohren, wobei eines, mehrere oder sämtliche der Futterrohre nach einem der vorstehenden Ansprüche ausgebildet sind, und
wobei die Futterrohre zueinander benachbart ein- oder mehrreihig angeordnet sind.

15. Futterrohranordnung nach Anspruch 14,
**dadurch gekennzeichnet, dass** die Anschlussflansche der Rohre mit jeweils mindestens einem benachbarten Anschlussflansch auf Stoß angeordnet sind, wobei die Anschlussflansche vorzugsweise mittels korrespondierender Befestigungsmittel miteinander verbunden sind, vorzugsweise mittels Rastelementen.

## Claims

1. Casing (1) for passing one or more lines through a wall or floor section (2), comprising
- a tubular body (4) configured to be embedded in a curable casting compound of the wall section (2), and
- a connecting flange (8) arranged at one end (6) of the tubular body (4),
wherein at least one length scale (22) with length measurements (24) of the tubular body (4) is arranged along the tubular body (4) on its outer surface starting from the connecting flange (8), wherein one, several or all length measurements (24) are each assigned a cut-to-length guide (26, 26') for assisted shortening of the length of the tubular body (4), which is formed on the outer surface of the tubular body (4) as an elevation (18, 18') extending in the circumferential direction and protruding in the radial direction,
**characterized in that**
a circumferential recess (48) is formed on the connecting flange (8) in the connecting region to the tubular body (4) as a receptacle for a collar of a blind cover that can be inserted into the tubular body (4).

2. Casing according to Claim 1,
wherein the length measurements (24) of the tubular body (4), in particular above a predetermined minimum length, are arranged at defined distances and/or indicate predetermined wall thicknesses or brick sizes.

3. Casing according to Claim 1 or Claim 2,
wherein the tubular body (4) has a number of first cut-to-length guides (26) in a first tubular body section (16), and a number of second cut-to-length guides (26') in a second tubular body section (16'), wherein the two sections are preferably arranged adjacent to one another, and wherein more preferably the first cut-to-length guides (26) have a first height, and the second cut-to-length guides have a second height.

4. Casing according to any of the preceding claims, **characterized in that** the first cut-to-length guides (26) form a web seal (20) on the outer surface of the tubular body (4), which is associated with the end of the tubular body (4) having the connecting flange (8) .

5. Casing according to any of the preceding claims, **characterized in that** the tubular body (4) has on its outer surface at least one sealing seat (30) for a sealing element that can be brought into sealing contact therewith, preferably between two cut-to-length guides.

6. Casing according to any of the preceding claims, **characterized in that** the tubular body (4) has, in addition to the cut-to-length guides (26, 26') on the outer surface of the tubular body (4), one or more elevations (32) extending in the axial direction as reinforcing struts.

7. Casing according to any of the preceding claims, **characterized in that** the tubular body (4) has a cross-section which preferably tapers conically at least on the inside from its first end (6) having the connecting flange (8) towards the opposite second end (12) .

8. Casing according to any of the preceding claims, **characterized in that** the second tubular body section (16') has at its free end a sleeve (14), which is enlarged in cross-section relative to the first tubular body section (16), for receiving an extension tube (50), wherein the sleeve (14) preferably has a free cross-section which decreases, preferably tapers conically, from the open end of the sleeve (14) in the direction of the first tubular body section (16).

9. Casing according to any of the preceding claims, **characterized in that** the connecting flange (8) has a regularly or irregularly textured surface for a bonded connection with a surface seal that can be coupled thereto.

10. Casing according to any of the preceding claims,
**characterized in that** the connecting flange (8) has one or more fastening tabs (34'), wherein the fastening tabs (34') preferably project radially outwards on the connecting flange (8).

11. Casing according to any of Claims 1 to 10,
**characterized in that** the tube has an end closure, wherein the closure is preferably designed as a blind cover, which is connected to the tube by means of a predetermined separation point.

12. Casing according to any of the preceding claims,
**characterized in that** the connecting flange (8) and/or the first cut-to-length guides (26) have at least one pair of diametrically opposite flattened areas (52).

13. Casing according to any of the preceding claims,
**characterized in that** the casing has a partially or completely circumferential stop in its interior for receiving and limiting insertion of a sealing insert, wherein the stop is preferably positioned in a range of 100 mm or less, particularly preferably in a range of 50 mm to 100 mm, away from one of the tube ends.

14. Casing arrangement, with
two or more casings, wherein one, more or all of the casings are formed according to any of the preceding claims, and
wherein the casings are arranged in one or more rows adjacent to one another.

15. Casing arrangement according to Claim 14,
**characterized in that** the connecting flanges of the tubes are arranged abutting each other with at least one adjacent connecting flange, wherein the connecting flanges are preferably connected to one another by means of corresponding fastening means, preferably by means of latching elements.

## Revendications

1. Tubage (1) destiné à faire passer une ou plusieurs conduites à travers une section de mur ou de sol (2), avec
- un corps tubulaire (4), qui est mis au point pour être intégré dans une masse de scellement durcissable de la section de mur (2),
- une bride de raccordement (8) disposée sur une extrémité (6) du corps tubulaire (4),
dans lequel au moins une échelle de longueur (22) avec des dimensions longitudinales (24) du corps tubulaire (4) est disposée en partant de la bride de raccordement (8) le long du corps tubulaire (4) sur sa surface extérieure, dans lequel respectivement un guide de coupe à la bonne longueur (26, 26') destiné à raccourcir de manière assistée la longueur du corps tubulaire (4) est associé à une, plusieurs ou toutes les dimensions longitudinales (24), lequel est réalisé sous la forme d'une partie surélevée (18, 18') s'étendant dans la direction périphérique et faisant saillie dans une direction radiale sur la surface extérieure du corps tubulaire (4),
**caractérisé en ce que**
un renfoncement (48) périphérique est réalisé en tant que logement pour un rebord d'un couvercle aveugle pouvant être inséré dans le corps tubulaire (4) sur la bride de raccordement (8) dans la zone de liaison avec le corps tubulaire (4).

2. Tubage selon la revendication 1,
dans lequel les dimensions longitudinales (24), en particulier à partir d'une longueur minimale prédéfinie, du corps tubulaire (4) sont disposées à des espacements définis et/ou indiquent des épaisseurs de mur ou des tailles de pierre prédéfinies.

3. Tubage selon la revendication 1 ou 2,
dans lequel le corps tubulaire (4) présente un nombre donné de premiers guidages de coupe à la bonne longueur (26) dans une première section de corps tubulaire (16) et un nombre donné de deuxièmes guides de coupe à la bonne longueur (26') dans une deuxième section de corps tubulaire (16'), dans lequel les deux sections sont disposées de préférence de manière adjacente l'une par rapport à l'autre, et dans lequel par ailleurs de préférence les premiers guides de coupe à la bonne longueur (26) présentent une première hauteur, et les deuxièmes guides de coupe à la bonne longueur présentent une deuxième hauteur.

4. Tubage selon l'une quelconque des revendications précédentes,
**caractérisé en ce que** les premiers guides de coupe à la bonne longueur (26) réalisent un joint d'étanchéité d'entretoise (20) sur la surface extérieure du corps tubulaire (4), lequel est associé à l'extrémité, présentant la bride de raccordement (8), du corps tubulaire (4).

5. Tubage selon l'une quelconque des revendications précédentes,
**caractérisé en ce que** le corps tubulaire (4) présente sur sa surface extérieure au moins un siège de joint d'étanchéité (30) pour un élément d'étanchéité pouvant être amené en appui de manière étanche avec celui-ci, de préférence entre deux guides de coupe à la bonne longueur.

6. Tubage selon l'une quelconque des revendications précédentes,
**caractérisé en ce que** le corps tubulaire (4) présente, en plus des guides de coupe à la bonne longueur (26, 26'), sur la surface extérieure du corps tubulaire (4), une ou plusieurs parties surélevées (32) s'étendant dans la direction axiale en tant qu'entretoises de renforcement.

7. Tubage selon l'une quelconque des revendications précédentes,
**caractérisé en ce que** le corps tubulaire (4) présente une section transversale se rétrécissant de préférence de manière conique au moins côté intérieur depuis sa première extrémité (6) présentant la bride de raccordement (8) en direction de la deuxième extrémité (12) opposée.

8. Tubage selon l'une quelconque des revendications précédentes,
**caractérisé en ce que** la deuxième section de corps tubulaire (16') présente, sur son extrémité libre, un manchon (14) agrandi dans la section transversale par rapport à la première section de corps tubulaire (16), destiné à recevoir un tuyau de rallongement (50), dans lequel de préférence le manchon (14) présente une section transversale libre, qui se réduit depuis l'extrémité ouverte du manchon (14) en direction de la première section de corps tubulaire (16), de préférence se rétrécit de manière conique.

9. Tubage selon l'une quelconque des revendications précédentes,
**caractérisé en ce que** la bride de raccordement (8) présente une surface structurée régulièrement ou irrégulièrement pour une liaison par liaison de matière à un joint d'étanchéité de surfaces pouvant être couplé à celle-ci.

10. Tubage selon l'une quelconque des revendications précédentes,
**caractérisé en ce que** la bride de raccordement (8) présente une ou plusieurs pattes de fixation (34'), dans lequel les pattes de fixation (34') dépassent vers l'extérieur radialement de préférence sur la bride de raccordement (8).

11. Tubage selon l'une quelconque des revendications 1 à 10,
**caractérisé en ce que** le tuyau présente une fermeture côté extrémité, dans lequel la fermeture est réalisée de préférence en tant que couvercle aveugle, lequel est relié au tuyau au moyen d'un point de rupture théorique.

12. Tubage selon l'une quelconque des revendications précédentes,
**caractérisé en ce que** la bride de raccordement (8) et/ou les premiers guides de coupe à la bonne longueur (26) présentent au moins une paire de zones aplaties (52) diamétralement opposées les uns les autres.

13. Tubage selon l'une quelconque des revendications précédentes,
**caractérisé en ce que** le tubage présente, pour loger et limiter l'enfilement d'un insert d'étanchéité, dans son intérieur, une butée en partie ou totalement périphérique, dans lequel de préférence la butée est positionnée de manière éloignée d'une des extrémités de tuyau dans une zone de 100 mm ou moins, de manière particulièrement préférée dans une plage de 50 mm à 100 mm.

14. Ensemble formant tubage, avec
deux tubages ou plus, dans lequel un, plusieurs ou la totalité des tubages sont réalisés selon l'une quelconque des revendications précédentes, et
dans lequel les tubages sont disposés en une rangée ou en plusieurs rangées de manière adjacente les uns par rapport aux autres.

15. Ensemble formant tubage selon la revendication 14,
**caractérisé en ce que** les brides de raccordement des tuyaux sont disposées en aboutement avec respectivement au moins une bride de raccordement adjacente, dans lequel les brides de raccordement sont reliées les unes aux autres de préférence au moyen de moyens de fixation correspondants, de préférence au moyen d'éléments d'enclenchement.
